(19) Europäisches Patentamt
European Patent Office
Office européen des brevets

(11) **EP 3 945 447 A1**

(12) **EUROPEAN PATENT APPLICATION**

(43) Date of publication:
**02.02.2022 Bulletin 2022/05**

(21) Application number: **20461555.3**

(22) Date of filing: **30.07.2020**

(51) International Patent Classification (IPC):
**G06F 30/28** (2020.01)      **G06F 30/23** (2020.01)
**G06F 30/30** (2020.01)      **G06F 115/10** (2020.01)
**G06F 111/10** (2020.01)

(52) Cooperative Patent Classification (CPC):
**G06F 30/28; G06F 30/23; G06F 30/30;**
G06F 2111/10; G06F 2115/10

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Okane Jacek Hanke Aldona Hanke
Spolka Jawna
42-603 Tarnowskie Gory (PL)**

(72) Inventors:
• **KSIEZYK, Mariusz
42-261 Lysiec (PL)**
• **TOMCZAK, Tadeusz
62-817 Zelazkow (PL)**
• **HANKE, Jacek
42-603 Tarnowskie Gory (PL)**

(74) Representative: **Kancelaria Eupatent.pl Sp. z.o.o
Ul. Kilinskiego 185
90-348 Lodz (PL)**

(54) **A METHOD AND SYSTEM FOR PERFORMING COMPUTATIONAL FLUID DYNAMICS COMPUTATIONS IN SPECIALISED INTEGRATED CIRCUITS**

(57)      A method for performing computations of computational fluid dynamics, using the discontinuous Galerkin method, wherein a solution is approximated by functions describing a particular scalar field $u$, in particular a pressure field or a temperature field or components of a velocity field, or a vector field $u$, in particular a velocity component gradient or a pressure gradient, or a temperature gradient, or a velocity gradient, defined locally in an area of a particular element, without a requirement of continuity at its edges, wherein a coupling between the elements is carried out by a numerical flux, characterised in that the computations are carried out in specialised integrated circuits according to a particular order.

Fig. 6

**EP 3 945 447 A1**

**Description**

FIELD OF THE INVENTION

The object of the invention is a method and a system for performing computations of computational fluid dynamics, in particular with the use of the modal discontinuous Galerkin method by means of specialised integrated circuits.

PRIOR ART

Computational fluid dynamics is a method that uses numerical methods to solve partial differential equations that describe fluid dynamics. It allows approximate determination of the distribution of velocity, pressure, temperature and other parameters in the flow using computer simulations, which avoids costly experimental tests, e.g. in aerodynamic tunnels.

From the US patent application US20070219766, a system accelerating computations of computational fluid dynamics is known in the form of a coprocessor assisting a central processing unit (CPU) in performing some of the most demanding computations. To decrease traffic on data bus, the data is compressed by the CPU, decompressed after being sent to the coprocessor, computations are performed, and then the results are sent back to the CPU in a compressed form.

From the US patent description US9158719, a device system for accelerating computations of computational fluid dynamics is known, composed of a central processing unit and an additional system implemented by means of an FPGA circuit. The additional FPGA circuit is used to accelerate computations by the finite volume method or the finite element method. The CPU and the FPGA perform computations simultaneously and constitute a computing node. Such computing nodes are connected with each other by a general-purpose communication bus.

From the US patent description US8805914, a device system is known that accelerates computations of computational fluid dynamics by means of FPGA or ASIC circuits. The device is based on the representation of numbers in fixed-point form in order to save logical resources used to create computing units.

There are known systems that allow acceleration of computations using FPGA or ASIC circuits in such areas as: cryptography, artificial intelligence, deep learning, physical simulations, as well as other computationally difficult tasks.

SUMMARY OF THE INVENTION

The aim of the invention is to provide a method and a system that will allow the computations time of computational fluid dynamics using the discontinuous Galerkin method to be shortened, by reducing the amount of data that has to be exchanged between the individual integrated circuits, and by removing conditional instructions from the main computational algorithm. It is a solution dedicated to solutions based on specialised integrated circuits, made in FPGA, ASIC or any other technology, which perform computations in a massively parallel manner and which can be combined with each other in any number, thereby obtaining a linear or close-to-linear performance scaling.

The object of the invention is a method and a system for performing computations of computational fluid dynamics with the use of the discontinuous Galerkin method in accordance with the following description and claims.

The discontinuous Galerkin method belongs to the family of finite element methods in which the computational domain, i.e. the space in which the simulation is performed, is divided into finite elements (i.e. it is discretised). The discontinuous Galerkin method also benefits from the control volume method, by introducing a numerical flux that is responsible for the coupling between neighbouring elements. In the discontinuous Galerkin method, the solution is approximated by functions defined locally within a given element, without the requirement of continuity at its boundaries. These local functions describe the distribution of all quantities present in the flow, such as velocity, pressure, temperature. The function values are described by the polynomial expansion coefficients of the adopted shape functions, which give information about the function value at any point in the element and on its faces. To compute the numerical flux, the values on the element face and on the face of the neighbouring element at Gauss points for the normalised face are needed. In order to reduce the amount of data transferred, which will contribute to the acceleration of computations, it is proposed to send, from the neighbouring element, the already computed values at Gauss points for the face of the neighbouring element. Thanks to this, there will be $(P+1)^2$ values to be sent, where P is the degree of the polynomial used for the adopted shape functions. In addition, in order to simplify the specialised integrated circuit and avoid conditional instructions, in the main course of computations for a particular element, it is proposed to use a specialised circuit that arranges the data in an appropriate order, because the sent values from the neighbouring face will be arranged in a local, for the neighbouring element, order.

SHORT DESCRIPTION OF THE DRAWING

The object of the invention is presented by means of embodiments in the drawing, in which:

Fig. 1 schematically shows a method for computing a gradient or divergence of a particular field for a computed element;
Fig. 2 shows node designations in a normalised element in three-dimensional space;
Fig. 3 shows a table with numbers of nodes in the two-dimensional coordinate system local for a face and the corresponding nodes in the three-dimensional global system for each face of the element;
Fig. 4 shows an arrangement of Gauss points on the face of the computed element, example for P=2;
Fig. 5 shows an arrangement of Gauss points on the face of a neighbouring element depending on the orientation of the face of the neighbouring element with respect to the face of the computed element, example for P=2;
Fig. 6 shows a schematic diagram of a computing unit;
Fig. 7 shows sequences of value indexes on the faces of neighbouring elements for quadrangular faces and the indexing method;
Fig. 8 shows schematically an integrated circuit comprising a plurality of computing units;
Fig. 9 shows a schematic diagram of a Gauss points reindexing circuit;
Fig. 10 shows a diagram of a computing system with a plurality of integrated circuits connected to external memories.

DETAILED DESCRIPTION

The discontinuous Galerkin method belongs to the family of finite element methods, in which the three-dimensional space in which computations are performed should be divided into finite elements. This process is called discretisation, and the computational space is called the computational domain.

The element $\mathrm{mesh}\Omega_{el}^{i}$, where $i$ is the element number, covers the K domain in its entirety:

$$K = \underset{i}{U} \; \Omega_{el}^{i} \qquad\qquad (1)$$

Any two finite elements can share only a whole face, edge, vertex, or can be separate.

The most important feature of the discontinuous Galerkin method, compared to the classical Galerkin method, is that it allows for the existence of a discontinuity of the function describing a particular quantity in the domain between elements. Therefore, it is possible to develop a particular function $u$ with respect to a fixed set of base functions $\Phi_i$ used to approximate the solution and independently in each of the finite elements.

$$u = \sum_{i=0}^{N} \widehat{a}_i \phi_i = \begin{bmatrix} \phi_0 \, \phi_1 \cdots \phi_N \end{bmatrix} \cdot \begin{bmatrix} \widehat{a}_0 \\ \widehat{a}_1 \\ \vdots \\ \widehat{a}_N \end{bmatrix} = \begin{bmatrix} \phi_0 \, \phi_1 \cdots \phi_N \end{bmatrix} \cdot \widehat{\boldsymbol{a}} \qquad\qquad (2)$$

where $\widehat{a}_i$ stands for expansion coefficients (degrees of freedom of a particular element), the value of N depends on the number of base functions and is N = (P + 1)$^3$ - 1, and P is the degree of the used polynomial. For a second order polynomial P = 2, the number of expansion coefficients in three-dimensional space is 27.

The main problem in computations of computational fluid dynamics is the determination of gradients and divergences of particular fields. The gradients are determined for scalar fields $u$, where $u$ denotes the pressure, temperature or other fields or components (in the x, y, z axes) of the velocity field. The divergence is determined for vector fields $\overline{u}$, where $\overline{u}$ denotes gradient field of the velocity component, pressure gradient, temperature gradient, velocity gradient or others. Gradient is a differential operator that converts a scalar field $u$ into a vector field $\overline{q}$ that indicates the directions of the fastest increases in the value of a particular scalar field. Divergence is a differential operator that assigns, to a vector field $\overline{u}$, a scalar field which formally is the scalar product of the Nabla operator with the vector of this vector field ($\nabla \cdot \overline{u}$).

To determine the field $\overline{q}$ which is a gradient of the scalar field $u$, the following formula is used:

$$\bar{q} = \nabla u = \left[ q_x, q_y, q_z \right] \qquad (3)$$

In the Galerkin approach, both sides of Equation 3 are multiplied by the vector test function $\bar{w}$:

$$\bar{w} = \left[ w_x, w_y, w_z \right] \qquad (4)$$

and are integrated over the area or a finite element, thus obtaining the following equation:

$$\int_{\Omega_{el}} \bar{w} \cdot \bar{q}\, dV = \int_{\Omega_{el}} \bar{w} \cdot \nabla u\, dV \qquad (5)$$

The Gauss-Green theorem, for transforming the right side of the equation to the so-called weak form, in which it is differentiated not the particular field $u$, but the test function $\bar{w}$ gives as a result:

$$\int_{\Omega_{el}} \bar{w} \cdot \bar{q}\, dV = - \int_{\Omega_{el}} u \nabla \cdot \bar{w}\, dV + \int_{\partial \Omega_{el}} \hat{u}\left(\bar{n} \cdot \bar{w}\right) dS \qquad (6)$$

Similarly, the field divergence $\bar{u}$ can be computed. By multiplying $\nabla \cdot \bar{u}$ by a scalar test function $w$, integrating over the area of a finite element $\Omega_{el}$, and again using the Gauss-Green theorem, the following equation can be obtained:

$$\int_{\Omega_{el}} w \nabla \cdot \bar{u}\, dV = - \int_{\Omega_{el}} \bar{u} \cdot \nabla w\, dV + \int_{\partial \Omega_{el}} w \hat{\bar{u}} \cdot \bar{n}\, dS \qquad (7)$$

In equations 6 and 7, the first term of the equation on the right side of the equation means integration over the volume V of a finite element, and the second term means integration over faces S of a finite element. In equations 6 and 7, there are values of $\hat{u}$ and $\hat{\bar{u}}$, respectively, which are numerical fluxes denoting numerical flux $\hat{u}$ for a scalar field $u$ and numerical flux $\hat{\bar{u}}$ for a vector field $\bar{u}$, respectively. Numerical fluxes in the discontinuous Galerkin method combine the boundary values of the integrated function in a particular finite element $\Omega_{el}$ and the values of the same function, but computed in the neighbouring element. By adopting the traditional symbols from the literature on the discontinuous Galerkin method, the boundary value of function $u$ in element $\Omega_{el}$ can be designated as $u^+$, and the boundary value computed from the distribution of an neighbouring element can be designated as $u^-$. The most important feature of the discontinuous Galerkin method, compared to the classical Galerkin method, is that the values of $u^+$ and $u^-$ may differ, thus introducing a discontinuity in the distribution of function $u$. In the case of a vector field, these designations take the form: $\bar{u}^+$ for the values on the faces of the computed element, and $\bar{u}^-$ for the values from the faces of the neighbouring elements.

Integral values are computed by the Gauss quadrature method. Thanks to the integration of functions describing a particular quantity over normalised cubic (or square in a two-dimensional space) elements, it is possible to use directly tables of Gauss points for one-dimensional intervals. Coordinates of the Gauss points in three-dimensional (3D) space are obtained as the product of one-dimensional (ID) coordinates corresponding to the directions of the system axes. Assuming an approximation by the functions of order P, P + 1 Gauss points are assumed for each direction of the coordinate system, which gives $(P + 1)^3$ integration points in the volume of element $\Omega_{el}$ or $(P + 1)^2$ points on a single face of element $\Omega_{el}$.

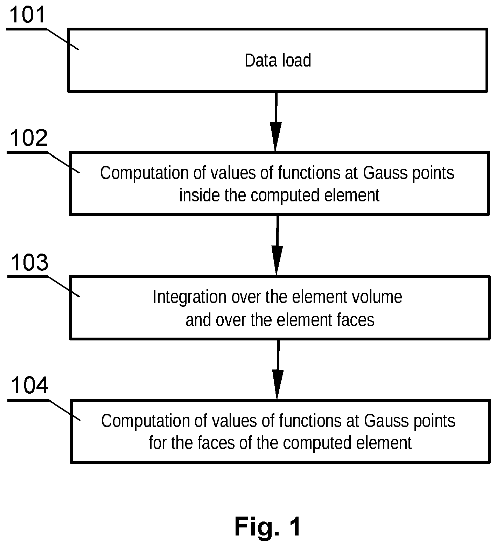

To perform integration over the faces of element $\Omega_{el}$, function values at Gauss points on the element face $(u^+, \bar{u}^+)$ and corresponding points from the faces of neighbouring elements $(u^-, \bar{u}^-)$ must be known. In order to limit the amount of data exchanged between the elements, the following computation method is proposed, shown schematically in Fig. 1:

- step 101: loading the expansion coefficients of a particular field for which computations should be made for the computed element, loading the values at Gauss points for the faces of the computed element ($u^+,\overline{u}^+$) and loading the values at Gauss points on the faces for the neighbouring elements ($u^+,\overline{u}^+$) which at that moment become component $u^-$ or $\overline{u}^-$ of numeric flux;

- step 102: on the basis of expansion coefficients of the particular scalar field for the computed element $\hat{a}$ or the particular vector field for the computed element $\widehat{a}_x$, $\widehat{a}_y$, $\widehat{a}_z$, determining the function values at Gauss points inside this element,
- step 103: performing integration by the Gauss quadrature method in element volume and on element faces according to formulas 6 or 7
- step 104: based on the obtained expansion coefficients, computing the function values at Gauss points for the faces of the computed element.

The result of the computations are expansion coefficients describing the gradient or divergence of the particular field and the values of the gradient or divergence of the particular field at Gauss points on the faces of the computed element, which later become the values retrieved by the neighbouring elements (step one) in the next step of the computation. This sequence of computations guarantees the smallest possible amount of data to be exchanged between elements.

After retrieving the data from the neighbouring elements, they must be properly arranged because they are retrieved as one compact block of data in the order determined for the local face pattern of the neighbouring element.

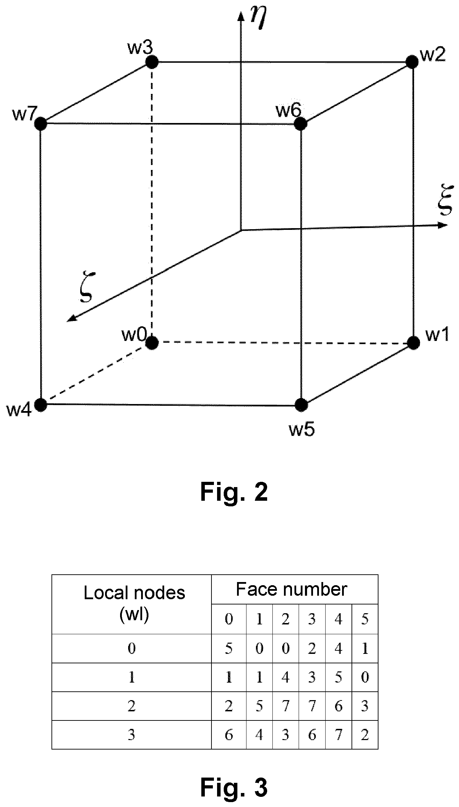

Assuming the normalised element which is a cube (shown in Fig. 2) in the local coordinate system ($\zeta$, $\eta$, $\xi$), in which the vertices of this element, located in nodes (w0, w1, w2, w3, w4, w5, w6, w7), have coordinates from the set {-1,1}, the transformation of the 3D coordinate system of its faces into local coordinate systems in the two-dimensional space of the faces is carried out according to the table shown in Fig. 3.

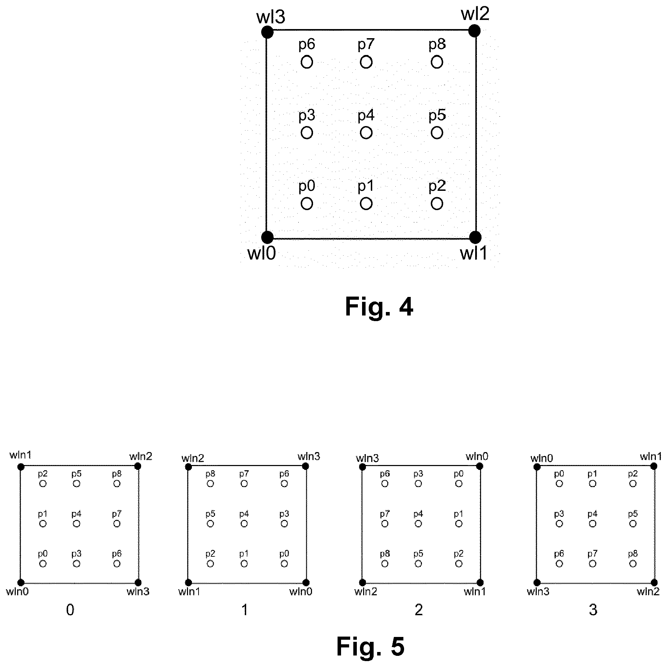

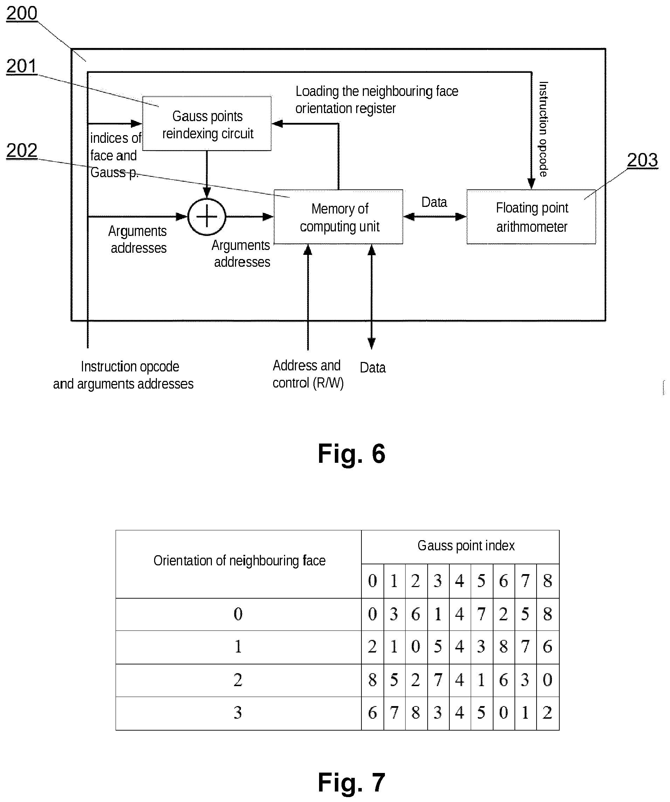

Transition from the 3D global coordinate system to the 2D local face coordinate system (shown in Fig. 4) with nodes (wl0, wl1, wl2, wl3) reduces the number of combinations of face orientations of elements neighbouring to the face of the computed element. All possible cases are shown in Fig. 5. It can be seen that the orientation referred to as "0" is when node wl0 of the neighbouring element coincides with node wl0 of the computed element. Orientation "1" is when node wl1 of the neighbouring element overlaps node wl0 of the computed element, etc. The rearrangement of the nodes of the faces corresponds to the arrangement of Gauss points on the faces and when data from the neighbouring elements are retrieved, values at Gauss points need to be properly rearranged, depending on the orientation of the neighbouring element, so that they correspond to the values at Gauss point of the computed element. A Gauss points reindexing circuit 201 is responsible for this process and is located in a computing unit 200, and cooperates with its other elements shown in Fig. 6.

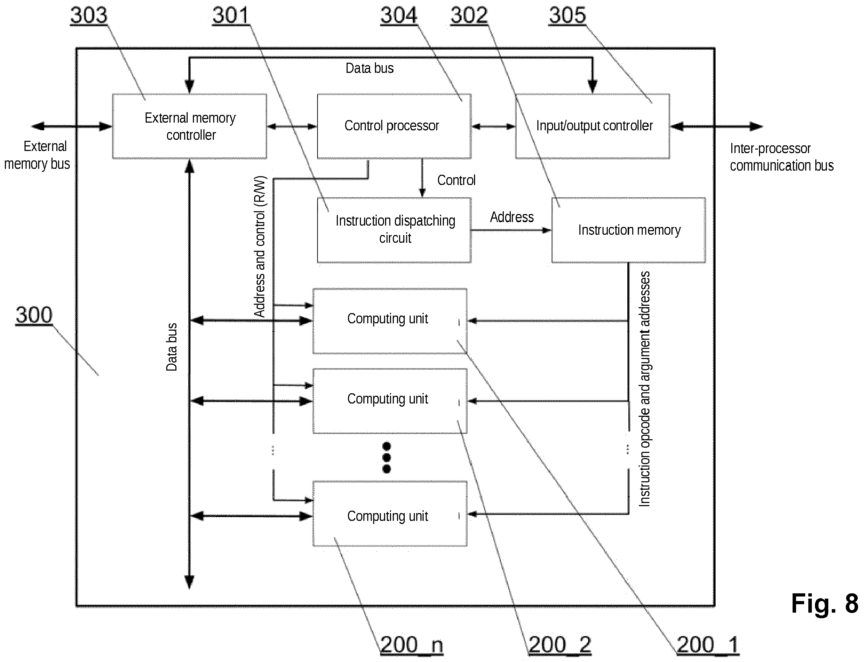

The computing units 200 may be embodied in a specialised integrated circuit, implemented using FPGA, ASIC or any other technology, which perform computations in a massively parallel manner and which can be combined with each other in any number, thereby obtaining a linear or close-to-linear performance scaling - as shown by way of example in Fig. 8.

The operation of the Gauss points reindexing circuit 201 is to generate addresses of values at Gauss points on the neighbouring face depending on the orientation of the face of the neighbouring element relative to the computed element, index of Gauss point and starting address of the memory area containing values at Gauss points on the neighbouring face. For quadrilateral faces, the neighbouring face can only be in one of the four orientations. Possible orientations for quadrilateral faces and the corresponding Gauss point systems are shown in Fig. 5 and in the Table in Fig. 7.

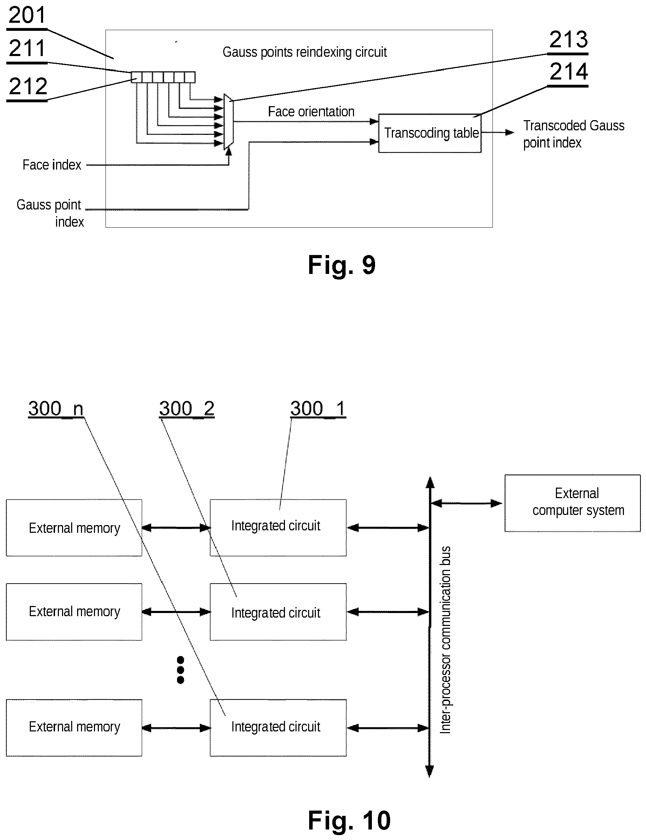

Generation of addresses of values at Gauss points on the neighbouring face is performed using the Gauss points reindexing circuit 201 having a schematic diagram shown in Fig. 9. It includes an neighbouring face orientation register 211, a multiplexer 213 and a transcoding table 214.

The developed Gauss points reindexing circuit 201 is an element that allows to significantly reduce the complexity of both a single computing unit 200 and the entire integrated circuit 300 because it allows:

- Full synchronisation of computations performed across all computing units 200 (all computing units 200 perform exactly the same instruction at any given time) despite the fact that different data may be required for each element. This allows all computing units 200 to be controlled with one shared sequence of instructions delivered to all computing units in a broadcast mode.
- Elimination of any branches from the instruction sequence being executed as they are replaced by computing the correct argument addresses in the Gauss points reindexing circuit 201.
- Elimination, from the computing unit 200, of the circuits responsible for providing the sequence of instructions, since all computing units 200 in an integrated circuit 300 may be controlled with one shared sequence of instructions delivered to all computing units 200 in the broadcast mode. Hence, one instruction dispatching circuit 301 is sufficient for the entire integrated circuit 300.

- Simplification of the structure of the instruction dispatching circuit 301 - due to the lack of branches in the instruction sequence, the instruction dispatching circuit 301 is limited to transmitting consecutive words from the memory 302 storing instruction codes.
- Reduction of the size of memory 302 needed to store the sequence of instructions since each instruction is limited to a short (e.g., 3-bit) instruction opcode and to a set of addresses of arguments from the memory of the computing unit 202.
- Elimination, from the computing unit 200, of address generation circuits (address is given directly in the instruction word), which reduces the complexity of the computing unit 200.
- Reduction of the size of data transferred during computations from external memory, because thanks to the use of Gauss points reindexing circuit 201 it is possible to load a compact block of data from external memory into the local memory of the computing unit 202 with one burst transaction, and then reorganise the data already in the local memory of the computing unit 202.

The neighbouring face orientation register 211 is used to store information about orientation of faces neighbouring to the element. The neighbouring face orientation register 211 contains 6 cells 212, one cell 212 for each face of the element. Each of the cells 212 of the neighbouring face orientation register 211 is 2 bits wide and includes a representation in a natural binary code of a number in the range 0 to 3, which is treated as an orientation identifier and simultaneously an index of a row of the table containing index sequences of the corresponding Gauss points for a particular orientation. The neighbouring face orientation register 211 is filled in before processing the data of a specific element. For each element, the contents of the neighbouring face orientation register 211 may be different.

The multiplexer 213 is used to select one cell 212 from the neighbouring face orientation register. Cell 212 contains a face orientation identifier which is also an index of a row of the transcoding table 214 containing index sequences of the corresponding Gauss points for a particular orientation. In the case of implementing the transcoding table 214 with the use of ROM, selecting bit strings which are successive representations in natural binary code allows the size of this memory to be limited. However, if the transcoding table 214 is implemented as a combinational circuit, standard methods for designing digital circuits can be used in order to find another manner to encode orientation information that will reduce the complexity of the circuit.

The transcoding table 214 performs the conversion of a pair comprising a face orientation and a Gauss point index into a transcoded Gauss point index. The conversion is performed according to the given index sequences shown in the table in Fig. 7. For example, the result for a face orientation of 1 and a Gauss point index of 2 is 0. Depending on technological constraints, the transcoding table 214 may be implemented as a ROM, a combinational circuit, or even a modifiable random-access memory (RAM), which allows its contents to be changed. Face orientation can be written in two bits (4 orientations) and Gauss point index in 4 bits (9 Gauss points). Ignoring irrelevant combinations for indices greater than 9, the memory size is 4 x 9 4-bit words, i.e. 144 bits.

The transcoded Gauss point index directly identifies the address of a value from the neighbouring element which value should be used during computations at a particular Gauss point of the neighbouring element. This address is computed as the sum of the starting address of the memory area containing the values at Gauss points on the neighbouring face and the transcoded Gauss point index multiplied by the distance between the subsequent values. This distance depends both on the number of bytes allocated to writing a single value and on whether these values are written directly one after another or with additional spacing (interleaved).

The number of computing units 200 results from the available bandwidth of the external memory and is only limited by technology and cost. To simplify the structure of the computing unit 200 as much as possible, all the computing units 200 execute exactly the same sequence of instructions. Thanks to this, the memory 302 storing the codes of the executed instructions is shared among all the computing units, and the instruction decoding process in the computing unit 200 is reduced only to ignoring, by the Gauss points reindexing circuit 201, instructions intended for the floating point arithmometer, and vice versa, to ignoring, by the arithmometer, instructions intended for the Gauss points reindexing circuit. The floating point arithmometer 203 is a circuit that performs arithmetic operations (addition, subtraction, multiplication, division, and/or comparison).

An additional simplification is the limitation of the argument set of the floating-point arithmometer 203 only to the contents of the memory 202 of the computing unit, which is a multi-port memory, with a capacity of, for example, $2^{12}$ words, and the lack of additional circuits generating addresses for memory 202 of the computing unit - addresses transferred to all the computing units are the same and are stored in one common memory storing the codes of the executed instructions 302. This allows for the elimination of direct communication between the arithmometer 203 and the external memory of the integrated circuit, which simplifies the construction of both the unit 200 and the entire integrated circuit 300.

In addition to a set of computing units 200, an integrated circuit 300 dedicated to the discontinuous Galerkin method comprises a circuit 301 for dispatching consecutive instructions for computing units, shared by all computing units, an external memory (e.g. DRAM) controller 303 in which the complete simulation data is stored, a simple processor 304 controlling the operation of the entire integrated circuit 300 and an input/output controller 305.

The input/output controller is used to exchange data between the integrated circuits 300 operating in parallel, and to transfer initial simulation data to the external memory of the integrated circuit 300 and to receive the results from any external system, e.g. a PC. It can be implemented as a typical PCI-Express bus controller, Ethernet, or even a high-speed SPI (Serial Peripheral Interface).

The task of the control processor 304 is to control and synchronise the operation of individual subcircuits of the integrated circuit 300. The primary task of the processor 304 is to control data transfer between the memory controller 303 and the memories 202 of individual computing units 200, and then, after all the data has been loaded into the memory of all the computing units 200, to launch the instruction dispatching circuit 301. An additional task of the processor 304 is to control data transfer through the input/output controller 305, i.e. to control data exchange with any external system (e.g., loading initial data and sending back simulation results) and with the remaining integrated circuits 300 operating in parallel. It can be implemented as a standard processor executing a control program written in any programming language, or as a state machine.

**Claims**

1. A method for performing computations of computational fluid dynamics, using the discontinuous Galerkin method, wherein a solution is approximated by functions describing a particular scalar field $u$, in particular a pressure field or a temperature field or components of a velocity field, or a vector field $\bar{u}$, in particular a velocity component gradient or a pressure gradient, or a temperature gradient, or a velocity gradient, defined locally in an area of a particular element, without a requirement of continuity at its boundaries, wherein a coupling between the elements is carried out by a numerical flux, **characterised in that** the computations are carried out in specialised integrated circuits, and the computation of a gradient of the particular scalar field $u$ or a divergence of the particular vector field $\bar{u}$ is carried out according to the following order:

   - loading (101) input data for the computation step, which are expansion coefficients $\hat{a}$ of the particular scalar field $u$ or $\widehat{a}_x$, $\widehat{a}_y$, $\widehat{a}_z$ of the particular vector field $\bar{u}$ for which the computations should be performed for a computed element $\Omega_{el}$, values $u^+$ or $\bar{u}^+$ at Gauss points for faces of the computed element $\Omega_{el}$ and values $u^+$ or $\bar{u}^+$ at Gauss points on faces for neighbouring elements, which become components $u^-$ or $\bar{u}^-$ of numerical flux,
   - computing (102) values of functions describing the particular field $u$ or $\bar{u}$ at Gauss points on the basis of expansion coefficients $\hat{a}$ of the particular scalar field $u$ or $\widehat{a}_x$, $\widehat{a}_y$, $\widehat{a}_z$ of the particular vector field $\bar{u}$ for the computed element $\Omega_{el}$ inside said computed element $\Omega_{el}$,
   - performing (103) an integration by means of the Gauss quadrature method in the volume of the computed element $\Omega_{el}$ and on the faces of the computed element $\Omega_{el}$, thus computing a gradient $\nabla u$ of the scalar field $u$ or a divergence $\nabla \cdot \bar{u}$ of the particular vector field $\bar{u}$,
   - computing (104), based on the obtained expansion coefficients, values of functions describing the resulting scalar field or the resulting vector field of values at Gauss points for the faces of the computed element $\Omega_{el}$.

2. A circuit for performing computations of computational fluid dynamics, **characterised in that** it operates according to the method according to claim 1 and comprises:

   - a processor (304)
   - an external memory controller (303),
   - an input/output controller (305) and
   - a plurality of computing units (200), each comprising a memory (202), a floating point arithmometer (203) and a Gauss points reindexing circuit (201) which is adapted to reorder data corresponding to the faces of the neighbouring elements depending on the orientation of the face of an neighbouring element which is neighbouring to the face of the computed element.

3. The circuit (300) according to claim 2, **characterised in that** the Gauss points reindexing circuit (201) comprises an neighbouring face orientation register (211) for storing information about the orientation of faces neighbouring to the computed element $\Omega_{el}$, connected to a multiplexer (213) for selecting one of cells (212) from the register (211) and a transcoding table (214) containing sequences of indices of the corresponding Gauss points for a particular orientation for converting a pair comprising a face orientation and a Gauss point index into a transcoded Gauss point index.

**101**

Data load

**102**

Computation of values of functions at Gauss points
inside the computed element

**103**

Integration over the element volume
and over the element faces

**104**

Computation of values of functions at Gauss points
for the faces of the computed element

## Fig. 1

Fig. 2

| Local nodes (wl) | Face number | | | | | |
|:---:|:---:|:---:|:---:|:---:|:---:|:---:|
| | 0 | 1 | 2 | 3 | 4 | 5 |
| 0 | 5 | 0 | 0 | 2 | 4 | 1 |
| 1 | 1 | 1 | 4 | 3 | 5 | 0 |
| 2 | 2 | 5 | 7 | 7 | 6 | 3 |
| 3 | 6 | 4 | 3 | 6 | 7 | 2 |

Fig. 3

wl3                      wl2

p6        p7        p8
○         ○         ○

p3        p4        p5
○         ○         ○

p0        p1        p2
○         ○         ○

wl0                      wl1

# Fig. 4

wln1          wln2
p2    p5    p8
○     ○     ○

p1    p4    p7
○     ○     ○

p0    p3    p6
○     ○     ○
wln0          wln3

0

wln2          wln3
p8    p7    p6
○     ○     ○

p5    p4    p3
○     ○     ○

p2    p1    p0
○     ○     ○
wln1          wln0

1

wln3          wln0
p6    p3    p0
○     ○     ○

p7    p4    p1
○     ○     ○

p8    p5    p2
○     ○     ○
wln2          wln1

2

wln0          wln1
p0    p1    p2
○     ○     ○

p3    p4    p5
○     ○     ○

p6    p7    p8
○     ○     ○
wln3          wln2

3

# Fig. 5

200

201

202

Gauss points
reindexing circuit

indices of
face and
Gauss p.

Loading the neighbouring face
orientation register

Instruction opcode

203

Arguments
addresses

Arguments
addresses

Memory of
computing unit

Data

Floating point
arithmometer

Instruction opcode
and arguments addresses

Address and
control (R/W)

Data

## Fig. 6

| Orientation of neighbouring face | Gauss point index | | | | | | | | |
|---|---|---|---|---|---|---|---|---|---|
| | 0 | 1 | 2 | 3 | 4 | 5 | 6 | 7 | 8 |
| 0 | 0 | 3 | 6 | 1 | 4 | 7 | 2 | 5 | 8 |
| 1 | 2 | 1 | 0 | 5 | 4 | 3 | 8 | 7 | 6 |
| 2 | 8 | 5 | 2 | 7 | 4 | 1 | 6 | 3 | 0 |
| 3 | 6 | 7 | 8 | 3 | 4 | 5 | 0 | 1 | 2 |

## Fig. 7

**Fig. 8**

External memory bus

Inter-processor communication bus

Data bus

303 — External memory controller
301 — Control processor
305 — Input/output controller
304 — Instruction dispatching circuit
302 — Instruction memory
300
Control
Address
Address and control (R/W)
Data bus
Instruction opcode and argument addresses
Computing unit
Computing unit
Computing unit
200_n
200_2
200_1

201

211

212

Gauss points reindexing circuit

213

214

Face orientation

Transcoding table

Transcoded Gauss point index

Face index

Gauss point index

**Fig. 9**

300_n

300_2

300_1

External memory

Integrated circuit

External computer system

External memory

Integrated circuit

Inter-processor communication bus

External memory

Integrated circuit

**Fig. 10**

Europäisches
Patentamt

European
Patent Office

Office européen
des brevets

# EUROPEAN SEARCH REPORT

Application Number

EP 20 46 1555

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | AXEL MODAVE ET AL: "GPU performance analysis of a nodal discontinuous Galerkin method for acoustic and elastic models", ARXIV.ORG, CORNELL UNIVERSITY LIBRARY, 201 OLIN LIBRARY CORNELL UNIVERSITY ITHACA, NY 14853, 25 February 2016 (2016-02-25), XP080962787, DOI: 10.1016/J.CAGEO.2016.03.008 * the whole document * * page 5, paragraphs 3,4 * * page 6, paragraph 2 * * page 7, paragraph 2 * * page 9, paragraph 3 * * page 16, paragraph 1 *  ----- | 1-3 | INV. G06F30/28 G06F30/23 G06F30/30  ADD. G06F115/10 G06F111/10 |
| X | KENTER TOBIAS ET AL: "OpenCL-Based FPGA Design to Accelerate the Nodal Discontinuous Galerkin Method for Unstructured Meshes", 2018 IEEE 26TH ANNUAL INTERNATIONAL SYMPOSIUM ON FIELD-PROGRAMMABLE CUSTOM COMPUTING MACHINES (FCCM), IEEE, 29 April 2018 (2018-04-29), pages 189-196, XP033399671, DOI: 10.1109/FCCM.2018.00037 [retrieved on 2018-09-07] * the whole document * * page 190, column 1, paragraph 6 - column 2, paragraph 2 * * page 190, column 2, last paragraph - page 192, column 1, paragraph 3 * * page 192, column 2, paragraph 3 - page 193, column 1, paragraph 2 *  ----- | 1-3 | TECHNICAL FIELDS SEARCHED (IPC)  G06F |

-/--

The present search report has been drawn up for all claims

| Place of search | Date of completion of the search | Examiner |
|---|---|---|
| Munich | 23 December 2020 | Wellisch, J |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

Europäisches
Patentamt

European
Patent Office

Office européen
des brevets

# EUROPEAN SEARCH REPORT

Application Number

EP 20 46 1555

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Henry Marc De Frahan: "Discontinuous Galerkin Method on Graphics Processing Units", <br> , <br> 1 July 2011 (2011-07-01), pages 1-103, XP055762317, <br> Retrieved from the Internet: <br> URL:https://marchdf.github.io/docs/ms_thesis.pdf <br> [retrieved on 2020-12-22] <br> * the whole document * <br> * page 28, paragraph 1 * <br> * section 4.2 Kernels and Parallel Implementation, pages 35ff * <br> * page 33, paragraph 1 * <br> * page 43 * <br> * page 61, paragraph 4 - page 63, paragraph 1 * <br> * page 63, paragraph 3 - page 64, last paragraph * <br> * figure C.1 * <br> * table D.1 * <br> ----- | 1-3 | |

TECHNICAL FIELDS
SEARCHED      (IPC)

The present search report has been drawn up for all claims

| Place of search | Date of completion of the search | Examiner |
|---|---|---|
| Munich | 23 December 2020 | Wellisch, J |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

page 2 of 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20070219766 A
- US 9158719 B
- US 8805914 B